# EUROPÄISCHE PATENTSCHRIFT

(11) **EP 4 034 399 B1**
(45) Veröffentlichungstag und Bekanntmachung des Hinweises auf die Patenterteilung: **24.07.2024**
(21) Anmeldenummer: 20746192.2
(22) Anmeldetag: 24.07.2020
(51) Int. Cl.: B60J 7/02

(54) **PERSONENKRAFTWAGEN MIT EINEM DACHMODUL**
PASSENGER VEHICLE WITH A ROOF MODULE
VÉHICULE À PASSAGERS DOTÉ D'UN MODULE DE TOIT

(30) Priorität: 27.09.2019 DE 102019006759
(43) Veröffentlichungstag der Anmeldung: 03.08.2022
(73) Patentinhaber: Mercedes-Benz Group AG, 70372 Stuttgart (DE)
(72) Erfinder: DEMMER, Achim, 71106 Magstadt (DE); PENCZEK, Detlev, 76437 Rastatt (DE)
(74) Vertreter: Novagraaf Group
(86) Internationale Anmeldenummer: PCT/EP2020/070976
(87) Internationale Veröffentlichungsnummer: WO 2021/058173

(56) Entgegenhaltungen:
- WO-A1-01/94141
- DE-A1- 102006 053 505
- DE-A1- 102016 009 136
- DE-B3- 102017 220 744
- JP-A- 2001 328 489

## Beschreibung

Die Erfindung betrifft einen Personenkraftwagen gemäß dem Oberbegriff des Anspruchs 1.

Einen Personenkraftwagen mit einem Dachmodul geht aus der DE 10 2016 009 136 A1 hervor. Das Dachmodul umfasst einen Modulrahmen, welcher - bei in Einbaulage des Dachmoduls im Kraftwagen gesehen - in Fahrzeugquerrichtung voneinander beabstandete Längsrahmenteile und in Fahrzeuglängsrichtung voneinander beabstandete, die Längsrahmenteile miteinander verbindende Querrahmenteile aufweist. Dabei sind die Längsrahmenteile erste Rahmenteile des Modulrahmens beziehungsweise die Längsrahmenteile werden auch als erste Rahmenteile des Modulrahmens bezeichnet, und die Querrahmenteile sind zweite Rahmenteile des Modulrahmens beziehungsweise werden auch als zweite Rahmenteile des Modulrahmens bezeichnet. Das Dachmodul nimmt seine Einbaulage in vollständig hergestelltem Zustand des Personenkraftwagens ein. Das Dachmodul weist außerdem wenigstens ein Deckelelement auf, welches an dem Modulrahmen gehalten und relativ zu dem Modulrahmen und somit relativ zu der Karosserie des Personenkraftwagens verlagerbar ist. Das gesamte Dachmodul wird in eine Dachöffnung der Karosserie eingesetzt, insbesondere in vormontiertem Zustand des Dachmoduls. Hierdurch kann der Personenkraftwagen auf besonders zeit- und kostengünstige Weise mit dem Dachmodul ausgestattet werden.

Aus der gattungsbildenden DE 10 2006 053 505 A1 geht ein Panoramahubdachmodul hervor, welches einen Rahmen mit zwei Querstreben und zwei Seitenstreben aufweist, wobei die in einer in eine Dachöffnung eingesetzten Position benachbart zu einer Frontscheibe angeordnete Querstrebe eine größere Breite als die übrigen Rahmenseitenteile aufweist und mit einer sogenannten Class-A Oberfläche ausgebildet ist, welche eine einen Teil der Fahrzeugaußenhaut bildende Sichtfläche darstellt. Das so in einem Vormontageschritt fertigstellte Panoramahubdachmodul wird in eine Dachöffnung der Karosserie eingesetzt und dort verklebt.

Aufgabe der vorliegenden Erfindung ist es, einen Personenkraftwagen mit einem solchen Dachmodul zu schaffen, bei dem die Teileanzahl, die Kosten und das Gewicht des Dachmoduls beziehungsweise des Personenkraftwagens besonders gering gehalten werden können.

Diese Aufgabe wird erfindungsgemäß durch einen Personenkraftwagen mit den Merkmalen des Anspruchs 1 gelöst. Vorteilhafte Ausgestaltungen mit zweckmäßigen Weiterbildungen der Erfindung sind Gegenstand der abhängigen Ansprüche.

Der erfindungsgemäße Personenkraftwagen weist ein Fahrzeugdach mit einer von Querelementen und Längselementen begrenzten Dachöffnung auf, in welche ein Modulrahmen eingesetzt ist. Dieser weist in Fahrzeugquerrichtung voneinander beabstandete Längsrahmenteile und in Fahrzeuglängsrichtung voneinander beabstandete Querrahmenteile auf. Das Dachmodul nimmt dabei seine Einbaulage in vollständig hergestelltem Zustand des Personenkraftwagens ein. Mit anderen Worten umfasst der Personenkraftwagen in seinem vollständig hergestellten Zustand die Karosserie und das Dachmodul. Die Längsrahmenteile sind erste Rahmenteile des Modulrahmens beziehungsweise werden auch als erste Rahmenteile bezeichnet. Die Querrahmenteile sind zweite Rahmenteile des Modulrahmens beziehungsweise die Querrahmenteile werden auch als zweite Rahmenteile bezeichnet. Insbesondere bezogen auf die Einbaulage erstrecken sich die Querrahmenteile in oder zumindest im Wesentlichen in Fahrzeugquerrichtung, wobei sich die Längsrahmenteile in oder zumindest im Wesentlichen in Fahrzeuglängsrichtung erstrecken. Dabei sind die Längsrahmenteile über die Querrahmenteile miteinander verbunden.

Das Dachmodul weist außerdem ein beispielsweise transparentes beziehungsweise lichtdurchlässiges Deckelelement auf, welches an dem Modulrahmen, insbesondere bewegbar, gehalten und dabei relativ zu dem Modulrahmen und somit relativ zu der Karosserie verlagerbar ist. Das Dachmodul ist beispielsweise als Schiebe- und/oder Hebedach ausgebildet, sodass beispielsweise das Deckelelement bezogen auf die Einbaulage des Dachmoduls in Fahrzeuglängsrichtung und/oder in Fahrzeughochrichtung relativ zu dem Modulrahmen und relativ zu der Karosserie verlagert, das heißt bewegt werden kann. Insbesondere ist das Dachmodul als außenlaufendes Schiebedach ausgebildet. In vollständig hergestelltem Zustand des Personenkraftwagens ist das Dachmodul in die Dachöffnung der Karosserie eingesetzt. Dabei ist das Deckelelement zwischen einer zumindest einen Teilbereich der Dachöffnung verschließenden Schließstellung und wenigstens einer den Teilbereich freigebenden Offenstellung relativ zu dem Modulrahmen und relativ zu der Karosserie verlagerbar. Um beispielsweise das Deckelelement aus der Schließstellung in die Offenstellung zu bewegen, wird das Deckelelement, insbesondere eine in Fahrzeuglängsrichtung nach hinten weisende Hinterkante des Deckelelements, in Fahrzeughochrichtung nach oben verlagert, woraufhin das Deckelelement in Fahrzeuglängsrichtung nach hinten relativ zu dem Modulrahmen und relativ zu der Karosserie verschoben wird.

Um nun die Teileanzahl und somit die Kosten und das Gewicht des Dachmoduls und somit des Personenkraftwagens insgesamt besonders geringhalten zu können, ist es vorgesehen, dass wenigstens eines der Rahmenteile einstückig mit wenigstens einer auch als Blendenelement bezeichneten Blende ausgebildet ist, welche zumindest eine einen Teil der Außenhaut des Personenkraftwagens bildende Sichtfläche aufweist. Unter der Sichtfläche ist eine Fläche zu verstehen, welche im vollständig hergestellten Zustand des Personenkraftwagens von sich außerhalb des Personenkraftwagens und somit in einer Umgebung des Personenkraftwagens aufhaltenden Personen optisch und haptisch wahrgenommen werden kann. Dies bedeutet, dass die Sichtfläche im vollständig hergestellten Zustand des Personenkraftwagens nicht etwa durch ein weiteres Bauelement des Personenkraftwagens nach außen hin überdeckt ist, sondern die Sichtfläche bildet einen Teil der Außenhaut und kann somit optisch und haptisch von den zuvor genannten Personen wahrgenommen werden.

Da die Blende einstückig mit dem wenigstens einen Rahmenteil ausgebildet ist, ist die Blende in das wenigstens eine Rahmenteil also integriert. Das heißt, die Blende ist durch das wenigstens eine Rahmenteil gebildet, wobei die Blende ein Außenhautbauteil ist. In der Folge kann auf zusätzliche, separate Verkleidungselemente zum Verkleiden des Modulrahmens verzichtet oder aber die Anzahl an solchen Blenden kann gering gehalten werden, sodass die Teileanzahl und somit das Gewicht des Modulrahmens und somit des Dachmoduls und des Personenkraftwagens insgesamt gering gehalten werden können. Außerdem kann beispielsweise die Anzahl an Fügeoperationen zum Herstellen des Dachmoduls und des Personenkraftwagens insgesamt gering gehalten werden, sodass das Dachmodul und der Personenkraftwagen zeit- und kostengünstig hergestellt werden können.

Der Personenkraftwagen zeichnet sich dadurch aus, dass das wenigstens eine Rahmenteil direkt mit einem der Dachöffnungs-Querelemente oder Dachöffnungs-Längselemente verbunden ist, wodurch dieses Dachöffnungs-Querelement oder Dachöffnungs-Längselement und das wenigstens eine Rahmenteil ein Profilbauteil mit einem geschlossenen Hohlquerschnitt bilden, wobei das Dachöffnungs-Querelement oder Dachöffnungs-Längselement eine Unterschale und das wenigstens eine Rahmenteil eine Oberschale des Profilbauteils bilden.

Als besonders vorteilhaft hat es sich gezeigt, wenn das wenigstens eine Rahmenteil zumindest teilweise, insbesondere zumindest überwiegend oder vollständig, aus einem Kunststoff gebildet ist. Das Bauteil weist daher ein nur geringes Gewicht auf. Dabei ist beispielsweise die Blende durch den Kunststoff, gebildet, wobei die Blende ein Außenhautbauteil ist.

Bei einer besonders vorteilhaften Ausführungsform der Erfindung ist die Sichtfläche durch den Kunststoff selbst gebildet, wodurch die Teileanzahl und somit die Kosten und das Gewicht in einem besonders geringen Rahmen gehalten werden können.

Als besonders vorteilhaft hat es sich gezeigt, wenn die Sichtfläche durch eine Schicht, insbesondere eine Lackschicht, gebildet ist, mit welcher der Kunststoff beschichtet ist. Hierunter ist insbesondere zu verstehen, dass der Kunststoff in pulverförmigem oder besonders vorzugsweise flüssigem Zustand der Schicht mit der Schicht versehen wird. Wieder mit anderen Worten ausgedrückt ist es beispielsweise vorgesehen, dass im Rahmen einer Herstellung des Dachmoduls die Schicht aus einem zunächst pulverförmigen oder vorzugsweise flüssigen Werkstoff hergestellt wird, welcher in flüssigem beziehungsweise pulverförmigem Zustand auf den Kunststoff der Blende aufgebracht wird und danach beispielsweise aushärtet, insbesondere sodass die Schicht in vollständig hergestelltem Zustand des Dachmoduls beziehungsweise des Personenkraftwagens fest beziehungsweise hart ist, das heißt in festem Aggregatszustand vorliegt.

Um das Gewicht besonders geringhalten sowie eine besonders hohe Steifigkeit des Modulrahmens realisieren zu können, ist es bei einer weiteren Ausführungsform der Erfindung vorgesehen, dass der Kunststoff ein faserverstärkter Kunststoff ist.

Um die Sichtfläche durch den Kunststoff selbst bilden und dabei eine besonders hohe Qualität, insbesondere Oberflächenqualität der Sichtfläche realisieren zu können, ist es in weiterer Ausgestaltung der Erfindung vorgesehen, dass der Kunststoff aus einem SMC-Material gebildet ist. Unter SMC (Sheet Moulding Compound) beziehungsweise unter einem SMC-Material (Sheet Moulding Compound-Material) ist eine insbesondere plattenförmige, teigartige Pressmasse aus wenigstens einem oder mehreren duroplastischen Reaktionsharzen und Verstärkungsfasern, insbesondere Glasfasern, zu verstehen, sodass vorzugsweise der Kunststoff ein Kunststoff eines Faser-Kunststoff-Verbunds ist. In SMC liegen alle nötigen Komponenten vollständig vorgemischt, fertig zur Verarbeitung vor.

Des Weiteren ist es vorzugsweise vorgesehen, dass, insbesondere im Rahmen des Verfahrens zur Herstellung des Dachmoduls, der Kunststoff mit der Schicht durch IMC (In-Mould-Coating) beziehungsweise durch ein IMC-Verfahren beschichtet wird. Im Rahmen des IMC-Verfahrens wird beispielsweise der Kunststoff mittels einer Form geformt, um dadurch das wenigstens eine Rahmenteil und somit die Blende herzustellen. Dabei wird der Kunststoff mit der Schicht beschichtet, während sich der Kunststoff innerhalb der Form befindet. Beispielsweise wird die Schicht beziehungsweise der Werkstoff, aus welchem die Schicht hergestellt wird, in die Form eingebracht, während die Form noch frei von dem Kunststoff ist. Daraufhin wird beispielsweise der Kunststoff in die Form eingebracht, sodass der Kunststoff insbesondere bevor und/oder während der Kunststoff mittels der Form umgeformt wird, mit der Schicht beschichtet wird, deren Werkstoff vor dem Kunststoff in die Form eingebracht wurde. Alternativ ist es denkbar, dass zunächst der Kunststoff in die Form eingebracht wird, während sich die Schicht beziehungsweise der Werkstoff, aus welchem die Schicht hergestellt wird, noch nicht in der Form befindet. Nach dem Einbringen des Kunststoffes in die Form und insbesondere nach dem mittels der Form bewirkten Umformen des Kunststoffes wird beispielsweise die Schicht beziehungsweise deren Werkstoff in die Form eingebracht, sodass der Kunststoff mit der Schicht beschichtet wird, während sich der Kunststoff innerhalb der Form befindet. Hierdurch kann das wenigstens eine Rahmenteil besonders zeit- und kostengünstig hergestellt werden.

Um auf besonders gewichtsgünstige Weise eine besonders hohe Steifigkeit des Modulrahmens realisieren zu können, ist es in weiterer Ausgestaltung der Erfindung vorgesehen, dass zumindest ein weiteres der Rahmenteile aus einem metallischen Werkstoff, insbesondere aus Blech, gebildet ist. Somit ist der einfach auch als Rahmen bezeichnete Modulrahmen vorzugsweise als Hybridrahmen ausgebildet, dessen Gewicht besonders gering gehalten werden kann.

Der erfindungsgemäße Personenkraftwagen weist insbesondere eine selbsttragende Karosserie auf.

Das wenigstens eine Deckelelement ist an dem Modulrahmen, insbesondere bewegbar, gehalten und relativ zu dem Modulrahmen und relativ zu der Karosserie verlagerbar, das heißt bewegbar. Vorzugsweise ist der Modulrahmen an der Karosserie festgelegt und somit relativ zu der Karosserie unbeweglich.

Als besonders vorteilhaft hat es sich gezeigt, wenn die Dachöffnung in Fahrzeuglängsrichtung nach vorne durch ein Querelement der Karosserie begrenzt ist. Das Querelement ist beispielsweise ein vorderer Windschutzscheibenquerrahmen, welcher eine Windschutzscheibenöffnung des Personenkraftwagens in Fahrzeughochrichtung nach oben hin begrenzt. In die Windschutzscheibenöffnung ist beispielsweise eine Windschutzscheibe des Personenkraftwagens eingesetzt, mittels dessen Windschutzscheibe die Windschutzscheibenöffnung zumindest teilweise, insbesondere zumindest überwiegend oder vollständig, verschlossen ist. Dabei ist das wenigstens eine Rahmenteil direkt mit dem Querelement verbunden, wodurch das Querelement und das wenigstens eine Rahmenteil ein einfach auch als Profil bezeichnetes Profilbauteil mit einem geschlossenen Hohlquerschnitt bilden. Unter dem Merkmal, dass das wenigstens eine Rahmenteil direkt mit dem Querelement verbunden ist, ist insbesondere zu verstehen, dass zwischen dem wenigstens einen Rahmenteil und dem Querelement kein weiteres Bauelement des Personenkraftwagens angeordnet ist. Dadurch können das Profil und somit der geschlossene Hohlquerschnitt mit einer nur sehr geringen Teileanzahl und somit gewichts- und kostengünstig realisiert werden, wobei gleichzeitig eine besonders hohe Steifigkeit der Karosserie dargestellt werden kann. Während das Querelement Bestandteil der Karosserie ist, ist das wenigstens eine Rahmenteil kein Bestandteil der Karosserie, sondern des separat von der Karosserie ausgebildeten Modulrahmens. Da der Hohlquerschnitt teilweise durch das Querelement und teilweise durch das wenigstens eine Rahmenteil, insbesondere direkt, begrenzt ist, und da beispielsweise das wenigstens eine Rahmenteil in Fahrzeughochrichtung oberhalb des Querelements angeordnet ist, ist das Querelement eine Unterschale und das wenigstens eine Rahmenteil eine Oberschale des Profilbauteils. Da die Unterschale und die Oberschale das Profil und den offenen Hohlquerschnitt bilden, kann beispielsweise eine zusätzliche, karosserieseitige und als Bestandteil der Karosserie ausgebildete Oberschale entfallen, sodass die Teileanzahl und somit die Kosten und das Gewicht besonders gering gehalten werden können. Hierdurch kann ein besonders großer Querschnitt für den Modulrahmen im Bereich des wenigstens einen Rahmenteils und des vorderen Querelements geschaffen werden, sodass beispielsweise eine besonders große, in Fahrzeuglängsrichtung verlaufende Erstreckung der Dachöffnung realisiert werden kann. Dadurch kann eine besonders gute und großflächige Durchsicht für sich im Innenraum des Personenkraftwagens aufhaltende Insassen durch die Dachöffnung hindurch gewährleistet werden.

Da vorzugsweise das wenigstens eine Rahmenteil aus einem faserverstärkten Kunststoff gebildet ist, das heißt da es sich bei dem Kunststoff vorzugsweise um einen faserverstärkten Kunststoff handelt, wobei vorzugsweise das wenigstens eine Rahmenteil aus einem SMC-Material gebildet ist, kann im Vergleich zu herkömmlichen Spritzguss eine besonders hohe Steifigkeit auf gewichtsgünstige Weise dargestellt werden.

Als weiterhin besonders vorteilhaft hat es sich gezeigt, wenn das Querelement aus einem metallischen Werkstoff, insbesondere aus Blech, gebildet ist, sodass auf gewichtsgünstige Weise eine besonders hohe Steifigkeit dargestellt werden kann.

Schließlich hat es sich als besonders vorteilhaft gezeigt, wenn die Sichtfläche in wenigstens einer Stellung des Deckelelements, insbesondere in der Schließstellung des Deckelelements, in Fahrzeuglängsrichtung zwischen einer in Fahrzeuglängsrichtung nach vorne weisenden Vorderkante des Deckelelements und der zuvor genannten Windschutzscheibe, insbesondere einer in Fahrzeughochrichtung nach oben beziehungsweise in Fahrzeuglängsrichtung nach hinten weisenden Ober- oder Hinterkante der Windschutzscheibe, angeordnet ist. Hierdurch kann beispielsweise ein besonders vorteilhafter, optischer Eindruck des Personenkraftwagens insbesondere in einem Übergangsbereich von der Windschutzscheibe zu der Sichtfläche realisiert werden, wobei beispielsweise die Sichtfläche im Hinblick auf ihre optische Wahrnehmung schwarz hochglänzend und dabei vergleichbar mit einer schwarzbedruckten Glasscheibe der Windschutzscheibe ist, wobei jedoch beispielsweise die Sichtfläche durch den Kunststoff selbst gebildet sein kann.

Weitere Vorteile und Einzelheiten der Erfindung ergeben sich aus der nachfolgenden Beschreibung sowie anhand der Zeichnungen. Dabei zeigen:
- Fig. 1: eine schematische Explosionsansicht eines Modulrahmens eines Dachmoduls gemäß einer ersten Ausführungsform für einen Personenkraftwagen, wobei wenigstens ein Rahmenteil des Modulrahmens aus einem Kunststoff gebildet und einstückig mit wenigstens einer Blende ausgebildet ist, die zumindest eine einen Teil der Außenhaut des Personenkraftwagens bildende Sichtfläche aufweist;
- Fig. 2: ausschnittsweise eine schematische Perspektivansicht auf den Personenkraftwagen mit dem Dachmodul gemäß einer zweiten Ausführungsform;
- Fig. 3: eine schematische Perspektivansicht auf das wenigstens eine Rahmenteil des Dachmoduls gemäß Fig. 2;
- Fig. 4: ausschnittsweise eine schematische Längsschnittansicht durch das Dachmodul gemäß Fig. 2;
- Fig. 5: eine schematische Darstellung eines Verfahrens zum Herstellen des wenigstens einen Rahmenteils und
- Fig. 6: ausschnittsweise eine schematische Draufsicht auf den Personenkraftwagen mit dem Dachmodul gemäß einer dritten Ausführungsform.

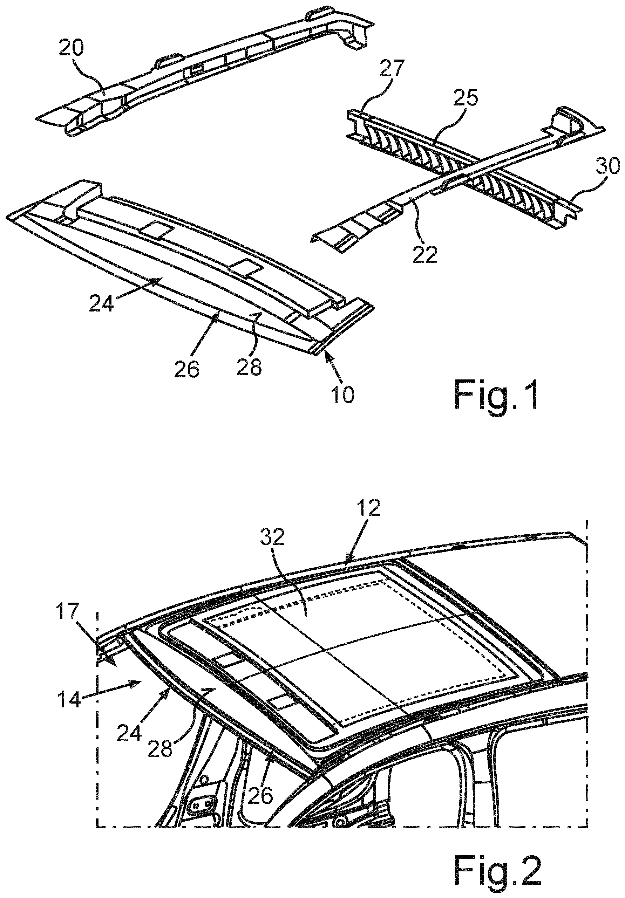

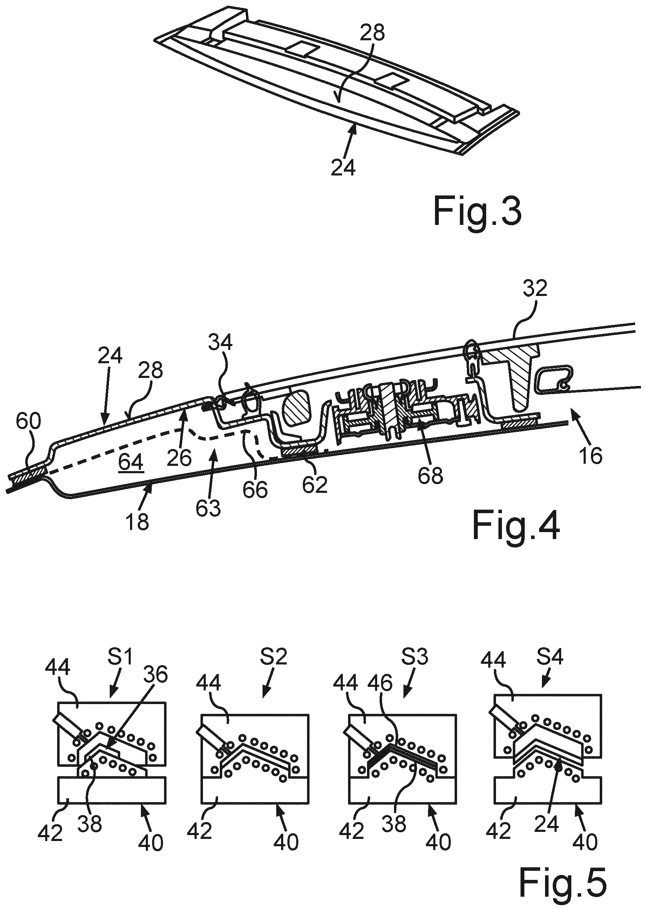

Fig. 1 zeigt in einer schematischen Explosionsansicht einen einfach auch als Rahmen bezeichneten Modulrahmen 10 für ein beispielsweise aus Fig. 2 erkennbares Dachmodul eines Personenkraftwagens. Während der in Fig. 1 gezeigte Modulrahmen 10 zu einer ersten Ausführungsform des Dachmoduls gehört, veranschaulichen Figuren 2 bis 4 eine zweite Ausführungsform des Dachmoduls. Dabei ist aus Fig. 2 der Personenkraftwagen teilweise erkennbar, wobei der Personenkraftwagen in Fig. 2 in einer schematischen und ausschnittsweisen Perspektivansicht von oben dargestellt ist. Der Personenkraftwagen weist eine selbsttragende Karosserie 12 mit einem Dach 14 auf. Aus Fig. 4 ist erkennbar, dass das Dach 14 eine Dachöffnung 16 aufweist, die in Fahrzeuglängsrichtung nach vorne hin von einem vorderen Querelement 18 des Fahrzeugdaches 14 begrenzt ist. Das Querelement 18 ist somit Bestandteil der Karosserie 12 und bildet dabei einen Teil, nämlichen ein oberes Querträgerelement eines Windschutzscheibenrahmens, welcher eine Windschutzscheibenöffnung 17 der Karosserie 12 in Fahrzeugquerrichtung nach oben hinten hin begrenzt. In vollständig hergestelltem Zustand des Personenkraftwagens ist in die Windschutzscheibenöffnung 17 eine in den Figuren nicht erkennbare und zumindest überwiegend transparente Windschutzscheibe eingesetzt, deren dem Querelement 18 zugewandter beziehungsweise das Querelement 18 nach außen hin abdeckender Randbereich beispielsweise schwarz bedruckt ist. Damit ist das Querelement 18 des Karosserierohbaus von außen für einen Betrachter nicht sichtbar.

Aus Fig. 1 ist erkennbar, dass der separat von der selbsttragenden Karosserie 12 ausgebildete Modulrahmen 10 in Fahrzeugquerrichtung (y-Richtung) voneinander beabstandete Längsrahmenteile 20 und 22 aufweist, welche sich in oder zumindest im Wesentlichen in Fahrzeuglängsrichtung (x-Richtung) erstrecken. Außerdem umfasst der Modulrahmen 10 in Fahrzeuglängsrichtung voneinander beabstandete Querrahmenteile 24 und 26, welche sich in oder zumindest im Wesentlichen in Fahrzeugquerrichtung erstrecken. Über die Querrahmenteile 24 und 26 sind die Längsrahmenteile 20 und 22 miteinander verbunden. Beispielsweise sind die Längsrahmenteile 20 und 22 aus einem metallischen Werkstoff, insbesondere aus Stahl und vorzugsweise aus einem Stahlblech, gebildet, wobei die Längsrahmenteile 20 und 22 beispielsweise durch Tiefziehen hergestellt und somit als Tiefziehteile ausgebildet sind. Das Querrahmenteil 25 ist beispielsweise aus einem Kunststoff gebildet. Beispielsweise ist das Querrahmenteil 25 aus einem faserverstärkten Kunststoff und/oder durch Spritzgießen hergestellt. Bei dem faserverstärkten Kunststoff handelt es sich beispielsweise um einen glasfaserverstärkten Kunststoff, welcher Polyamid als Matrix und Glasfasern als Verstärkungsfasern aufweist, welche in die Matrix eingebettet sind.

Bei dem in Fig. 1 gezeigten Ausführungsbeispiel sind auch Verbindungselemente 27 und 30 vorgesehen, über welche beispielswiese das Querrahmenteil 25 mit den Längsrahmenteilen 20 und 22 verbunden ist. Dabei sind beispielsweise die Verbindungselemente 27 und 30 jeweils zumindest teilweise mit dem Kunststoff, aus welchem das Querrahmenteil 25 gebildet ist, umspritzt und damit in das Querrahmenteil 25 quasi eingebettet. Die Verbindungselemente 27 und 30 sind vorzugswiese aus einem metallischen Werkstoff, insbesondere aus Blech und vorzugsweise aus Stahlblech, gebildet.

In Zusammenschau mit Fig. 2 ist erkennbar, dass das Dachmodul in seinem vollständig hergestellten Zustand und insbesondere in vollständig hergestelltem Zustand des Personenkraftwagens wenigstens oder genau ein einfach auch als Deckel bezeichnetes Deckelelement 32 aufweist, welches zumindest teilweise, insbesondere zumindest überwiegend oder vollständig, transparent beziehungsweise lichtdurchlässig ausgebildet sein kann. Das Deckelelement 32 ist bewegbar an dem Modulrahmen gehalten und relativ zu dem Modulrahmen 10 und relativ zu der Karosserie 12, insbesondere in Fahrzeughochrichtung und/oder in Fahrzeuglängsrichtung, verlagerbar. Wie besonders gut aus Figuren 2 und 4 erkennbar ist, ist das Deckelelement 32 zwischen einer in Figuren 2 und 4 gezeigten Schließstellung und wenigstens einer Offenstellung relativ zu dem Modulrahmen 10 und relativ zu der Karosserie 12 bewegbar. In der Schließstellung verschließt das Deckelelement 32 zumindest einen Teilbereich der Dachöffnung 16, in die das Dachmodul eingesetzt ist. In der Offenstellung gibt das Deckelelement 32 den Teilbereich frei.

Um nun die Teileanzahl und somit das Gewicht und die Kosten des Dachmoduls besonders geringhalten zu können, ist bei der ersten Ausführungsform und der zweiten Ausführungsform das vordere Querrahmenteil 24 aus einem Kunststoff gebildet und dabei einstückig mit wenigstens einer auch als Blendenelement bezeichneten Blende 26 ausgebildet, welche zumindest eine einen Teil der Außenhaut des Personenkraftwagens bildende Sichtfläche 28 aufweist. Bei dem Kunststoff, aus welchem das Querrahmenteil 24 und somit die Blende 26 gebildet sind, handelt es sich bei der ersten Ausführungsform um einen faserverstärkten Kunststoff, welcher aus einem SMC-Material gebildet ist beziehungsweise ein SMC-Material ist (SMC - Sheet Moulding Compound). Bei dem SMC-Material handelt es sich um eine plattenförmige, teigartige Pressmasse aus wenigstens einem duroplastischen Reaktionsharz und Verstärkungsfasern, insbesondere Glasfasern, wobei im Rahmen eines Verfahrens zum Herstellen des Dachmoduls das Querrahmenteil 24 und somit die Blende 26 aus dem SMC-Material hergestellt werden. Hierbei ist beziehungsweise wird vorzugsweise die Sichtfläche 28 durch den Kunststoff selbst gebildet, wodurch eine besonders hohe Oberflächenqualität der Sichtfläche 28 realisiert werden kann. Insbesondere kann durch Verwendung der SMC-Technologie die Sichtfläche 28 derart hergestellt werden, dass sie im Hinblick auf ihre optische und vorzugsweise auch haptische Wahrnehmbarkeit derart schwarz und hochglänzend ausgestaltet werden kann, dass ihre optische und vorzugsweise auch haptische Wahrnehmbarkeit der beziehungsweise denen des schwarzbedruckten Randbereichs der Windschutzscheibe ähnelt oder gar entspricht.

Aus Fig. 3 ist erkennbar, dass die Sichtfläche 28 eine besonders große, in Fahrzeugquerrichtung verlaufende Breite sowie eine besonders große, in Fahrzeuglängsrichtung verlaufende Länge aufweist und demzufolge weit herausgezogen ist. Wie besonders gut aus Fig. 4 erkennbar ist, ist die Sichtfläche 28 bezogen auf die Schließstellung des Deckelelements 32 in Fahrzeuglängsrichtung zwischen einer Vorderkante 34 des Deckelelements 32 und einer Oberkante der Windschutzscheibe angeordnet, wobei die Vorderkante 34 in der Schließstellung in Fahrzeuglängsrichtung nach vorne hin der Blende 26 zugewandt ist und sich in Fahrzeuglängsrichtung nach hinten hin an die Sichtfläche 28 beziehungsweise an die Blende 26 anschließt. Insgesamt ist erkennbar, dass die Blende 26 ein in das gemäß der ersten Ausführungsform vordere Querrahmenteil 24 integriertes Außenhautbauteil ist. Eine zusätzliche, separate Blende kann somit vermieden werden beziehungsweise die Anzahl an solchen zusätzlichen, separaten Blenden kann gering gehalten werden, sodass die Teileanzahl und die Kosten und das Gewicht des Dachmoduls gering gehalten werden können. Die Sichtfläche 28 wird auch als Außenhautfläche oder Außenhautsichtfläche bezeichnet, da sie im vollständig hergestellten Zustand des Personenkraftwagens von Personen, die sich in einer Umgebung des Personenkraftwagens aufhalten, optisch und haptisch wahrgenommen werden kann und somit nicht durch ein anderes, separates Verkleidungselement verkleidet ist. Die vorigen und folgenden Ausführungen zum Querrahmenteil 24 können auch auf andere Rahmenteile und somit beispielsweise auf die Längsrahmenteile 20 und 22 und das Querrahmenteil 25 übertragen werden und umgekehrt, sodass alternativ oder zusätzlich das Längsrahmenteil 20 und/oder das Längsrahmenteil 22 und/oder das Querrahmenteil 25 aus einem Kunststoff gebildet und einstückig mit wenigstens einem Blendenelement ausgebildet sein können, die zumindest eine einen Teil der Außenhaut des Personenkraftwagens bildende Sichtfläche aufweist.

Bei einer weiteren, in den Figuren nicht gezeigten Ausführungsform kann vorgesehen sein, dass die Sichtfläche 28 nicht etwa durch den Kunststoff selbst, sondern durch eine beispielsweise als Lackschicht ausgebildete Schicht gebildet ist oder wird, mit welcher der Kunststoff beschichtet ist beziehungsweise wird. Dabei ist es vorzugsweise vorgesehen, dass der Kunststoff durch IMC, das heißt durch ein IMC-Verfahren mit der Schicht beschichtet wird (IMC - In Mould Coating).

Fig. 5 zeigt in einer schematischen Darstellung ein Verfahren zum Herstellen des Dachmoduls. Insbesondere ist aus Fig. 5 ein Verfahren zum Herstellen des Querrahmenteils 24 erkennbar, wobei im Rahmen des Verfahrens zum Herstellen des Dachmoduls beispielsweise das zuvor genannte IMC-Verfahren durchgeführt wird, mittels welchem der Kunststoff auf besonders einfache, zeit- und kostengünstige Weise mit der Schicht beschichtet werden kann.

Bei einem ersten Schritt S1 des Verfahrens werden beispielsweise das in Fig. 5 mit 36 bezeichnete SMC-Material und somit beispielsweise der in Fig. 5 mit 38 bezeichnete Kunststoff in eine Form 40 eingebracht. Bei einem zweiten Schritt S2 des Verfahrens wird das SMC-Material 36 geformt, in dem zwei Formhälften 42 und 44 der Form 40 zusammengepresst werden. Hierdurch wird der Kunststoff 38 gepresst und geformt. Nach dem Formen des Kunststoffes 38 und/oder während des Formens des Kunststoffes 38 wird in die Form 40 ein Werkstoff 46, insbesondere in flüssigem oder pulverförmigem Zustand, eingebracht, insbesondere eingespritzt, sodass der, insbesondere geformte, Kunststoff 38 zumindest in einem Teilbereich mit dem Werkstoff 46 beschichtet wird. Aus dem Werkstoff 46 wird die zuvor genannte Schicht hergestellt, sodass der Kunststoff 38 innerhalb der Form 40 mit der Schicht beschichtet wird. Der beispielsweise zunächst flüssige Werkstoff 46 härtet aus, nachdem er in die Form 40 eingebracht wurde, wodurch schließlich die Schicht hergestellt wird. Somit ist die Schicht in vollständig hergestelltem Zustand des Dachmoduls fest.

Bei einem dritten Schritt S3 wird der Werkstoff 46 in die Form 40 eingebracht. Bei einem sich zeitlich an den dritten Schritt S3 anschließenden vierten Schritt S4 wird das Querrahmenteil 24 mit der Schicht und somit mit der Blende 26 und der Sichtfläche 28 entformt, indem die Werkzeughälften 42 und 44 voneinander wegbewegt werden. Unter dem Entformen ist zu verstehen, dass das die Blende 26 und die Sichtfläche 28 aufweisende Querrahmenteil 24 aus der Form 40 entnommen wird. Besonders gut aus Fig. 5 ist erkennbar, dass während der Schritte S1 und S2 der Werkstoff 46 und somit die Schicht noch nicht in der Form 40 angeordnet waren, sodass bei dem Verfahren der Kunststoff 38 in die Form 40 eingebracht wird, während sich die Schicht noch nicht in der Form 40 befindet. Alternativ dazu ist es denkbar, dass zunächst der Werkstoff 46 beziehungsweise die Schicht in die Form 40 eingebracht wird, während sich der Kunststoff 38 noch nicht in der Form 40 befindet, sodass erst nach dem Einbringen des Werkstoffs 46 beziehungsweise der Schicht der Kunststoff 38 in die Form 40 eingebracht wird. Auch bei dieser Ausführungsform wird der Kunststoff 38 nicht etwa außerhalb der Form 40, sondern, insbesondere ausschließlich, innerhalb der Form 40 mit der Schicht versehen und dadurch beschichtet. Dadurch kann das Querrahmenteil 24 auf besonders zeit- und kostengünstige Weise hergestellt werden.

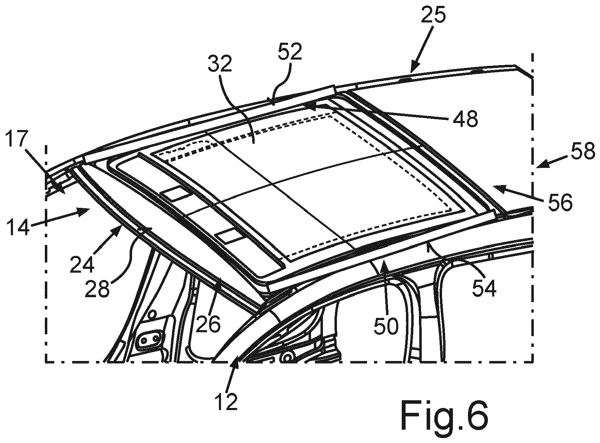

Schließlich zeigt Fig. 6 eine dritte Ausführungsform des Dachmoduls. Bei der dritten Ausführungsform ist das jeweilige Längsrahmenteil 20 beziehungsweise 22 aus einem Kunststoff gebildet und einstückig mit einer jeweiligen Blende 48 beziehungsweise 50 ausgebildet, welche zumindest eine einen Teil der Außenhaut des Personenkraftwagens bildende Sichtfläche 52 beziehungsweise 54 aufweist. Die Blenden 48 und 50 bilden dabei eine sogenannte, auch als Dachreling bezeichnete Reling.

Alternativ oder zusätzlich ist es bei der dritten Ausführungsform vorgesehen, dass das hintere Querrahmenteil 25 aus einem Kunststoff gebildet und dabei einstückig mit wenigstens einer Blende 56 ausgebildet ist, welche zumindest eine einen Teil der Außenhaut des Personenkraftwagens bildende Sichtfläche 58 aufweist. Die Blende 56 wird beispielsweise als eine Art Antennenblende verwendet.

Wie aus Fig. 4 erkennbar ist, ist es vorzugsweise vorgesehen, dass das Querelement 18 direkt mit dem vorderen Querrahmenteil 24 verbunden ist. Hierzu sind beispielsweise in Fahrzeuglängsrichtung voneinander beabstandete Kleberaupen 60 und 62 vorgesehen, über und mittels welchen das Querrahmenteil 24 und das Querelement 18 direkt miteinander verklebt sind. Hierdurch bilden das Querelement 18 und das Querrahmenteil 24 ein einfach auch als Profil bezeichnetes Profilbauteil 63, welches sich zumindest im Wesentlichen in Fahrzeugquerrichtung erstreckt und zumindest in einem Längenbereich einen geschlossenen Hohlquerschnitt 64 aufweist. Dabei sind beispielsweise das Querrahmenteil 24 und das Querelement 18 jeweilige Schalenelemente, welche jeweils für sich alleine betrachtet einen offenen Hohlquerschnitt aufweisen. Der jeweilige, offene Hohlquerschnitt des jeweiligen Schalenelements ist beispielsweise durch das jeweils andere Schalenelement geschlossen und somit zu dem umfangseitig geschlossenen Hohlquerschnitt 64 ergänzt. Hierdurch kann beispielsweise ein in Fig. 4 durch eine gestrichelte Linie veranschaulichtes, zu der Karosserie 12 gehörendes und somit als Bestandteil der Karosserie 12 ausgebildetes Schalenelement 66 entfallen, sodass die Teileanzahl und somit das Gewicht besonders gering gehalten werden kann. Gleichzeitig kann eine hohe Steifigkeit gewährleistet werden. Außerdem ist das auch als Rohbaudachrahmen bezeichnete Querelement 18 in Fahrzeuglängsrichtung besonders weit nach hinten geführt, verlängert oder gezogen, um eine besonders hohe Steifigkeit realisieren zu können.

Aus Fig. 4 ist ausschnittsweise auch ein vorzugsweise als elektrischer Antrieb ausgebildeter Antrieb 68 erkennbar, mittels welchem das Deckelelement 32 angetrieben und dadurch relativ zu dem Modulrahmen 10 verlagert werden kann. Dabei ist der Antrieb 68 Bestandteil des Dachmoduls und somit zusammen mit dem Modulrahmen 10 und dem Deckelelement 32 an der Karosserie 12 montierbar. Insbesondere ist der Antrieb 68 zumindest mittelbar, insbesondere direkt, an dem Modulrahmen 10 gehalten.

## Patentansprüche

1. Personenkraftwagen mit einer Karosserie (12), welche ein Fahrzeugdach (14) mit einer Dachöffnung (16) aufweist, und mit einem in die von Querelementen und Längselementen begrenzte Dachöffnung (16) eingesetzten Dachmodul, welches einen Modulrahmen (10), welcher in Fahrzeugquerrichtung voneinander beabstandete Längsrahmenteile (20, 22) als erste Rahmenteile und in Fahrzeuglängsrichtung voneinander beabstandete Querrahmenteile (24, 25) als zweite Rahmenteile aufweist, über welche die Längsrahmenteile (20, 22) miteinander verbunden sind, und wenigstens ein Deckelelement (32) umfasst, welches an dem Modulrahmen (10) gehalten und relativ zu dem Modulrahmen (10) verlagerbar ist, wobei wenigstens eines der Rahmenteile (20, 22, 24, 25) einstückig mit wenigstens einer Blende (26, 48, 50, 56) ausgebildet ist, welche zumindest eine einen Teil der Außenhaut des Personenkraftwagens bildende Sichtfläche (28, 52, 54, 58) aufweist,
**dadurch gekennzeichnet, dass**
das wenigstens eine Rahmenteil (20, 22, 24, 25) direkt mit einem der Dachöffnungs-Querelemente (18) oder Dachöffnungs-Längselemente verbunden ist, wodurch dieses Dachöffnungs-Querelement (18) oder Dachöffnungs-Längselement und das wenigstens eine Rahmenteil (20, 22, 24, 25) ein Profilbauteil (63) mit einem geschlossenen Hohlquerschnitt (64) bilden, wobei das Dachöffnungs-Querelement (18) oder Dachöffnungs-Längselement eine Unterschale und das wenigstens eine Rahmenteil (20, 22, 24, 25) eine Oberschale des Profilbauteils (63) bilden.

2. Personenkraftwagen nach Anspruch 1,
**dadurch gekennzeichnet, dass**
die Sichtfläche (28, 52, 54, 58) in wenigstens einer Stellung des Deckelelements (32) in Fahrzeuglängsrichtung zwischen einer Vorderkante (34) des Deckelelements (32) und einer Windschutzscheibe des Personenkraftwagens angeordnet ist.

3. Personenkraftwagen nach Anspruch 1,
**dadurch gekennzeichnet, dass**
das wenigstens eine Rahmenteil (20, 22, 24, 25) aus einem Kunststoff (38) gebildet ist.

4. Personenkraftwagen nach Anspruch 3,
**dadurch gekennzeichnet, dass**
die Sichtfläche (28, 52, 54, 58) durch den Kunststoff (38) selbst gebildet ist.

5. Personenkraftwagen nach Anspruch 3,
**dadurch gekennzeichnet, dass**
die Sichtfläche (28, 52, 54, 58) durch eine Schicht gebildet ist, mit welcher der Kunststoff (38) beschichtet ist.

6. Personenkraftwagen nach einem der Ansprüche 3 bis 5,
**dadurch gekennzeichnet, dass**
der Kunststoff (38) ein faserverstärkter Kunststoff ist.

7. Personenkraftwagen nach einem der Ansprüche 3 bis 6,
**dadurch gekennzeichnet, dass**
der Kunststoff (38) aus einem SMC-Material (36) gebildet ist.

## Claims

1. Passenger car comprising a body (12) which has a vehicle roof (14) having a roof opening (16), and comprising a roof module that is inserted into the roof opening (16), which is delimited by transverse elements and longitudinal elements, and that has a module frame (10) having longitudinal frame parts (20, 22) spaced apart from one another in the transverse direction of the vehicle as first frame parts and transverse frame parts (24, 25) spaced apart from one another in the longitudinal direction of the vehicle as second frame parts, via which the longitudinal frame parts (20, 22) are interconnected, and that comprises at least one cover element (32) which is held on the module frame (10) and can be displaced relative to the module frame (10), at least one of the frame parts (20, 22, 24, 25) being formed in one piece with at least one panel (26, 48, 50, 56) which has at least one visible surface (28, 52, 54, 58) forming part of the outer surface of the passenger car,
**characterized in that**
the at least one frame part (20, 22, 24, 25) is connected directly to one of the roof opening transverse elements (18) or roof opening longitudinal elements, as a result of which this roof opening transverse element (18) or roof opening longitudinal element and the at least one frame part (20, 22, 24, 25) form a profile component (63) having a closed hollow cross-section (64), the roof opening transverse element (18) or the roof opening longitudinal element forming a lower shell and the at least one frame part (20, 22, 24, 25) forming an upper shell of the profile component (63).

2. Passenger car according to claim 1,
**characterized in that**
the visible surface (28, 52, 54, 58), in at least one position of the cover element (32), is arranged in the vehicle longitudinal direction between a front edge (34) of the cover element (32) and a windshield of the passenger car.

3. Passenger car according to claim 1,
**characterized in that**
the at least one frame part (20, 22, 24, 25) is formed by a plastics material (38).

4. Passenger car according to claim 3,
**characterized in that**
the visible surface (28, 52, 54, 58) is formed by the plastics material (38) itself.

5. Passenger car according to claim 3,
**characterized in that**
the visible surface (28, 52, 54, 58) is formed by a layer with which the plastics material (38) is coated.

6. Passenger car according to any of claims 3 to 5,
**characterized in that**
the plastics material (38) is a fiber-reinforced plastics material.

7. Passenger car according to any of claims 3 to 6,
**characterized in that**
the plastics material (38) is formed by an SMC material (36).

## Revendications

1. Voiture de tourisme, comportant une carrosserie (12) qui présente un toit de véhicule (14) comportant une ouverture de toit (16), et comportant un module de toit inséré dans l'ouverture de toit (16) délimitée par des éléments transversaux et des éléments longitudinaux, lequel module de toit comprend un cadre de module (10) qui présente des parties de cadre longitudinales (20, 22) espacées les unes des autres dans une direction transversale de véhicule en tant que premières parties de cadre, et des parties de cadre transversales (24, 25) espacées les unes des autres dans une direction longitudinale de véhicule en tant que secondes parties de cadre par l'intermédiaire desquelles les parties de cadre longitudinales (20, 22) sont reliées entre elles, et comprend au moins un élément de recouvrement (32), lequel est maintenu sur le cadre de module (10) et peut être déplacé par rapport au cadre de module (10), dans laquelle au moins l'une des parties de cadre (20, 22, 24, 25) est réalisée d'une seule pièce avec au moins un écran (26, 48, 50, 56) qui présente au moins une surface visible (28, 52, 54, 58) formant une partie du revêtement de la voiture de tourisme,
**caractérisée en ce que**
l'au moins une partie de cadre (20, 22, 24, 25) est directement reliée à un élément parmi les éléments transversaux d'ouverture de toit (18) ou les éléments longitudinaux d'ouverture de toit, moyennant quoi ledit élément transversal d'ouverture de toit (18) ou ledit élément longitudinal d'ouverture de toit et l'au moins une partie de cadre (20, 22, 24, 25) forment une pièce formant profilé (63) comportant une section transversale creuse fermée (64), dans laquelle l'élément transversal d'ouverture de toit (18) ou l'élément longitudinal d'ouverture de toit forme une coque inférieure et l'au moins une partie de cadre (20, 22, 24, 25) forme une coque supérieure de la pièce formant profilé (63).

2. Voiture de tourisme selon la revendication 1,
**caractérisée en ce que**
la surface visible (28, 52, 54, 58) est disposée entre un bord avant (34) de l'élément de recouvrement (32) et un pare-brise de la voiture de tourisme dans au moins une position de l'élément de recouvrement (32) dans la direction longitudinale de véhicule.

3. Voiture de tourisme selon la revendication 1,
**caractérisée en ce que**
l'au moins une partie de cadre (20, 22, 24, 25) est formée à partir d'une matière plastique (38).

4. Voiture de tourisme selon la revendication 3,
**caractérisée en ce que**
la surface visible (28, 52, 54, 58) est formée par la matière plastique (38) en elle-même.

5. Voiture de tourisme selon la revendication 3,
**caractérisée en ce que**
la surface visible (28, 52, 54, 58) est formée par une couche de laquelle la matière plastique (38) est recouverte.

6. Voiture de tourisme selon l'une des revendications 3 à 5,
**caractérisée en ce que**
la matière plastique (38) est une matière plastique renforcée de fibres.

7. Voiture de tourisme selon l'une des revendications 3 à 6,
**caractérisée en ce que**
la matière plastique (38) est formée à partir d'un matériau de mélange à mouler en feuille (SMC) (36).
